# EUROPÄISCHE PATENTANMELDUNG

(11) **EP 2 628 663 A2**
(43) Veröffentlichungstag der Anmeldung: **21.08.2013**
(21) Anmeldenummer: 13151252.7
(22) Anmeldetag: 15.01.2013
(51) Int. Cl.: B62D 21/20, B62D 29/00, B62D 53/08, B60P 3/00

(54) **Innenlader**

(30) Priorität: 17.02.2012 DE 102012101272
(71) Anmelder: Meierling GmbH & Co. KG, 58093 Hagen (DE)
(72) Erfinder: Becker, Heinrich, 58093 Hagen (DE)
(74) Vertreter: Dörner, Kötter & Kollegen

(57) **Zusammenfassung**

Die Erfindung betrifft einen Innenlader (1), umfassend zwei parallel zueinander angeordnete Längsträger (3), an denen Achshalteböcke (40) mit luftgefederten Einzelradschwingen (4) zur Aufnahme von Rädern (42) befestigt sind. Unter den Längsträgern (3) ist eine starre Kupplungsplatte angeschweißt, die mit einem hiermit korrespondierenden Kupplungselement einer Sattelzugmaschine (11) verbindbar ist.

## Beschreibung

Die Erfindung betrifft einen Innenlader, mit zwei parallel zueinander angeordneten Längsträgern, an denen Achshalteböcke mit luftgefederten Einzelradschwingen zur Aufnahme von Rädern befestigt sind. Die Erfindung betrifft weiterhin einen Sattelzug, umfassend eine Sattelzugmaschine und einem Innenlader.

Innenlader werden vor allem für den Transport großer Glasscheiben oder auch Betonbauteilen, wie Trägern oder Bindern eingesetzt, welche eine Höhe von bis zu 3,60 m aufweisen können. Diese werden auf speziellen A- oder L- förmigen Transportgestellen oder auch entsprechenden Paletten zusammengefasst, welche von Tragprofilen des Innenladers aufgenommen werden können. Der Innenlader ist eine spezielle Form des Sattelaufliegers. Diese Sattelauflieger haben keine durchgehenden Achsen zwischen den Rädern, sondern eine besondere Form der Einzelradaufhängung, die sogenannten Einzelradschwingen. Ein Innenlader weist ein Chassis auf, welches aus zwei Längsträgern gebildet ist, die im vorderen Bereich über Querträger verbunden sind, sodass etwa die Form einer Stimmgabel gebildet ist. Die Einzelradschwingen sind mit einer Luftfederung ausgestattet, welche gleichzeitig als Hubvorrichtung für das Auf- und Abladen von Transportgestellen dient. Zum Absenken des Chassis kann die Luft aus den Luftbälgen der Luftfederung abgelassen werden. Im abgesenkten Zustand kann unter ein Transportgestell gefahren werden und durch Aufpumpen der Luftbälge der Luftfederung die ursprüngliche Höhe des Chassis wiederhergestellt werden. Hierzu weisen Transportgestell und Chassis des Innenladers regelmäßig korrespondierende, zumeist winklige Längsträger auf, sodass beim Anheben des Chassis des Innenladers das Transportgestell automatisch mit angehoben wird.

Um das gesamte Chassis anheben bzw. absenken zu können, ist die Sattelplatte, die den Zapfen zum Anschließen an eine Sattelzugmaschine trägt, an einer hydraulischen oder pneumatischen Hubschwinge angebracht, die gemeinsam mit den Luftfedern der Einzelradschwingen betätigbar ist, sodass eine gemeinsame Absenkung oder Anhebung erzielbar ist. Die notwendige Bodenfreiheit ist so über die Luftfedern der Einzelradschwingen und der hydraulischen bzw. pneumatischen Hubschwinge einstellbar. Nachteilig bei diesem bekannten Innenlader ist, dass die Konstruktion der Hubschwinge sehr aufwändig ist. Darüber hinaus weist die aus Stahl gefertigte Hubschwinge ein nicht unerhebliches Gewicht auf, wodurch das zulässige Ladegewicht des Innenladers reduziert ist.

Hier will die Erfindung Abhilfe schaffen. Der Erfindung liegt die Aufgabe zu Grunde, einen Innenlader der vorgenannten Art bereitzustellen, der aufwandminimiert herstellbar ist und bei dem das zulässige Ladegewicht erhöht ist. Gemäß der Erfindung wird diese Aufgabe durch die Merkmale des kennzeichnenden Teils des Patentanspruchs 1 gelöst.
Mit der Erfindung ist ein Innenlader geschaffen, der aufwandminimiert herstellbar ist und der zudem ein geringeres Gewicht aufweist, wodurch das zulässige Ladegewicht erhöht ist. Anstelle der aufwändigen Hubschwinge ist nunmehr eine starre Kupplungsplatte unter den Längsträgern angeschweißt, die direkt mit einem hiermit korrespondierenden Kupplungselement einer Sattelzugmaschine verbindbar ist. Die Absenkung des Chassis kann über die Luftfederung der Sattelzugmaschine erfolgen. Die Kupplungsplatte ist entweder als Sattelkupplung zur Aufnahme eines an der Sattelzugmaschine angeordneten Kupplungszapfens ausgebildet oder sie weist eine Sattelplatte mit Kupplungszapfen zur Verbindung mit einer an der Sattelzugmaschine angeordneten Sattelkupplung auf.

In Ausgestaltung der Erfindung sind die Längsträger des Innenladers jeweils aus einem einstückig gezogenen Aluminiumprofil gebildet. Hierdurch ist das Gewicht des Innenladers weiter reduziert, wodurch die maximale zulässige Zuladung erhöht ist.

In Weiterbildung der Erfindung sind die Längsträger als Kastenprofile ausgebildet, in denen innen Verstrebungen angeordnet sind, die einstückig in dem Längsträger angeformt sind. Durch die Anformung der Verstrebungen in dem einstückig gezogenen Aluminiumprofil entfallen diesbezügliche Schweißarbeiten, wie sie bei den im Stand der Technik vorhandenen Stahl konstruktionen erforderlich sind.

In Ausgestaltung der Erfindung sind an den Längsträgern Anschlüsse für die Achshalteböcke der Einzelradschwingen angeformt. Hierdurch entfallen diesbezügliche bisher erforderliche Anpassarbeiten, wodurch der Herstellungsaufwand weiter minimiert ist.

In weiterer Ausgestaltung der Erfindung umfassen die Anschlüsse für die Achshalteböcke der Einzelradschwingen Nutenaufnahmen für Achshaltebockbleche. Hierdurch ist die Montage der Achshalteböcke vereinfacht. Die Achshaltebockbleche sind einfach in die Nuten einschiebbar und können dort nachfolgend verschweißt werden.

In Weiterbildung der Erfindung sind an den Längsträgern Einformungen zur Befestigung einer Plane angeordnet. Hierdurch ist eine einfache Befestigung der Plane bevorzugt auf der Außenseite des Längsträgers ermöglicht, wodurch eine hierdurch verursachte Vergrößerung der Fahrzeuggesamtbreite verhindert ist.

In weiterer Ausgestaltung der Erfindung ist in den wenigstens einen Längsträger wenigstens eine Ausnehmung zur Aufnahme eines Bremszylinders vorhanden. Hierdurch entfallen aufwendige Schweißarbeiten zur Erstellung der erforderlichen Aufnahme. Bevorzugt sind die in dem Längsträger angeformten Verstrebungen derart ausgebildet, dass eine kastenartige Innenverstrebung gebildet ist, sodass an der jeweils erforderlichen Stelle ein Ausschnitt zur Aufnahme eines Bremszylinders eingebracht werden kann, ohne dass ein zusätzliches Einschweißen von Stützblechen zur Gewährleistung der Stabilität des Längsträgers erforderlich ist.

In weiterer Ausgestaltung der Erfindung sind an dem wenigstens einen Längsträger Längsnuten eingeformt, in die Seitenwände eines Verstärkungsprofils eingreifen, das den Längsträger in seiner Länge lediglich bereichsweise überdeckt. Hierdurch ist eine geringere Dimensionierung des Tragprofils ermöglicht, wodurch eine weitere Material- und Gewichtsersparnis bewirkt ist. In dem vorderen Bereich des Chassis, wo aufgrund der dort angreifenden Kräfte und Momente eine größere Dimensionierung der Längsträger erforderlich ist, erfolgt diese durch Anbringung des Verstärkungsprofils, das genau auf die erforderliche Länge angepasst werden kann. Das Verstärkungsprofil kann mit seinen Seitenwänden einfach in die Längsnuten des Längsträgers eingebracht und mit diesem verschweißt werden.

In Weiterbildung der Erfindung ist das Verstärkungsprofil aus einem einstückig gezogenen Aluminiumprofil gebildet. Hierdurch ist eine einfache Herstellung eines gewichtsoptimierten Verstärkungsprofils ermöglicht.

Bevorzugt ist das Verstärkungsprofil in Art eines U-Profils ausgebildet, auf dessen Innenseite Verstrebungen angeformt sind. Diese Verstrebungen können gleichermaßen bei der einstückigen Herstellung des Verstärkungsprofil mit ausgebildet werden, sodass zusätzliche Schweißarbeiten bei der Herstellung des Verstärkungsprofils nicht erforderlich sind.

Gegenstand der Erfindung ist weiterhin ein Sattelzug, umfassend eine Sattelzugmaschine und einen Innenlader der vorgenannten Art mit dem Merkmalen des Patentanspruchs 14. Dadurch, dass die Sattelzugmaschine eine Luftfederung aufweist, deren maximaler Hubweg wenigstens dem maximalen Hubweg der Luftfederung der Einzelradschwingen des Innenladers entspricht, ist ein gleichmäßiges Absenken und Anheben des Innenladers ermöglicht. Eine Hubschwinge, wie sie im Stand der Technik angeordnet ist, ist nicht erforderlich.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

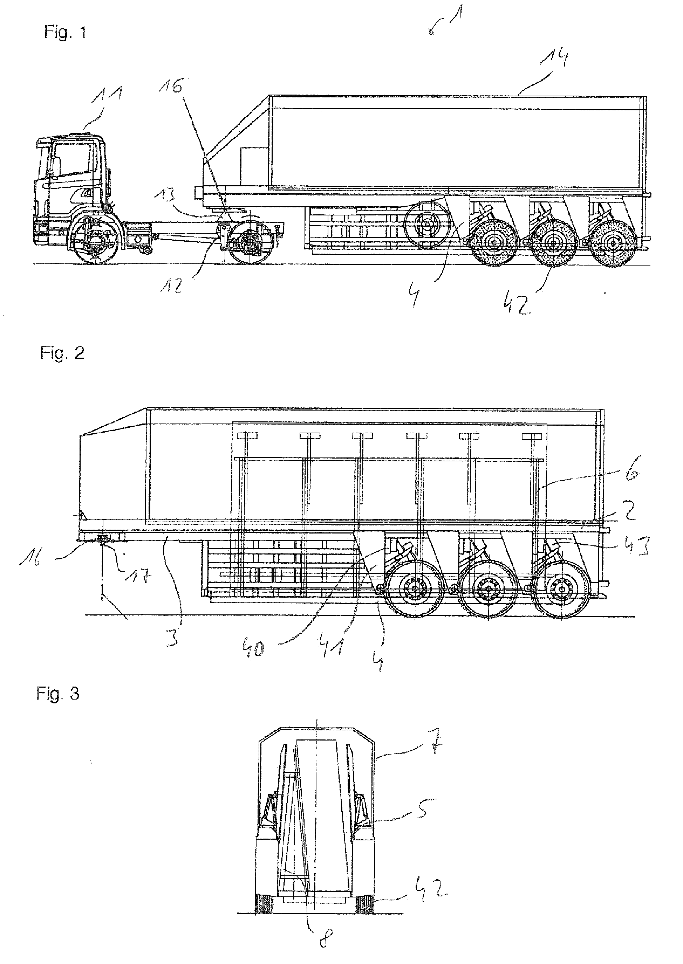

- Fig. 1: die schematische Darstellung eines Sattelzuges,
- Fig. 2: die schematische Darstellung eines Innenladers;
- Fig. 3: die schematische Darstellung des Innenladers aus Figur 2 in der Ansicht von hinten;
- Fig. 4: die schematische Darstellung des Chassis des Innenladers aus Figur 2;
- Fig. 5: die Darstellung eines Längsträgers des Chassis gemäß Figur 4 und
- Fig. 6: die Darstellung des Querschnitts des Längsträgers des Chassis aus Figur 4
a) im Schnitt A-A
b) im Schnitt B-B;

Der als Ausführungsbeispiel gewählte Sattelzug 1 besteht aus einer Zugmaschine 11, die eine Luftfederung 12 aufweist und die über einen Kupplungszapfen 17 mit einem eine Sattelplatte 16 aufweisenden Innenlader 14 verbunden ist.

Der Innenlader 14 umfasst im Wesentlichen ein Chassis 2, welches zwei parallel zueinander angeordnete Längsträger 3 umfasst, an denen jeweils drei Achshalteböcke 40 zur Aufnahme jeweils einer luftgefederten Einzelradschwinge 4 angebracht sind. Die Achshalteböcke 40 weisen Achshaltebockbleche 41 auf, die mit dem jeweiligen Längsträger 3 verschweißt sind und die Einzelradschwinge 4 aufnehmen. Innen sind an dem Chassis gegenüberliegend zwei Tragprofile 5 zur Aufnahme und Fixierung von mit Glasscheiben bestückten Transportgestellen 8 angeordnet. Weiterhin ist an dem Chassis 2 ein Gerüst 6 zur Befestigung einer Plane 7 angebracht. Der Innenlader wird heckseitig über eine - nicht dargestellte - Tür verschlossen, welche wesentlich für die Steifigkeit des Chassis ist. An seinem der Zugmaschine 11 zugewandten Ende ist an dem Innenlader 14 unter seinen Längsträgern 3 ein Sattelplatte 16 mit einem Kupplungszapfen 17 angeschweißt, über die der Innenlader 14 mit einer Sattelkupplung 13 der Zugmaschine 11 verbindbar ist. Die einen Kupplungszapfen 17 aufweisende Sattelplatte 16 ist im Ausführungsbeispiel aus Stahl hergestellt. Alternativ kann unter den Längsträgern auch eine Sattelkupplung angeordnet sein, die mit einer hiermit korrespondierenden Sattelplatte einer Zugmaschine 11 verbindbar ist.

Die Längsträger 3 sind im Ausführungsbeispiel jeweils aus einem einstückig gezogenen Aluminiumprofil gebildet. Innerhalb der kastenförmig ausgebildeten Längsträger 3 sind Streben 31 angeformt, welche der Stabilität der Längsträger 3 dienen. Dabei sind die Streben 31 an der dem Boden zugewandten Seite der Längsträger 3 derart angeformt, dass ein Kasten 32 gebildet ist. In den Kasten 32 sind bedarfsmäßig Ausschnitte 33 zur Aufnahme von Bremszylindern 43 der Einzelradschwinge 4 einbringbar, ohne dass die Stabilität des Längsträgers 3 beeinträchtigt wird. Beidseitig des Kastens 32 sind außen an den Längsträgern 3 Nuten 34 zur Aufnahme von Achsbockblechen 41 der Einzelradschwingen 4 angeordnet. Die Nuten 34 sind jeweils über die gesamte Länge der Längsträger 3 durchgehend ausgebildet und dienen gleichzeitig auch im vorderen Bereich der Aufnahme der Seitenwände 37 eines Verstärkungsprofils 36, das mit dem jeweiligen Längsträger 3 verschweißt ist.

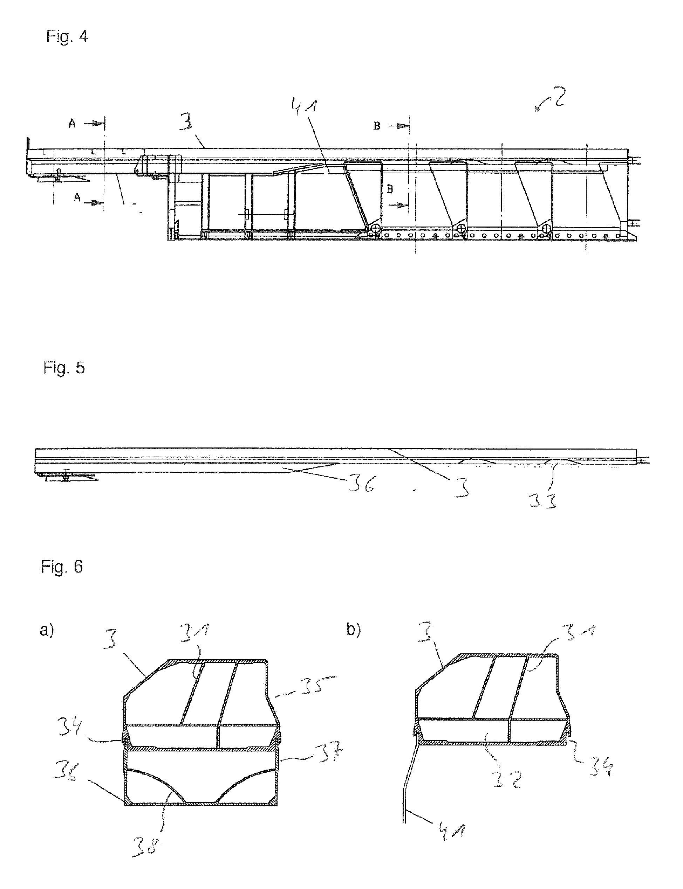

Seitlich ist in den Längsträgern 3 eine über die gesamte Länge des jeweiligen Längsträgers 3 verlaufende Einformung 35 angeordnet. Die Einformung 35 dient der flächenbündigen Aufnahme der Plane 7. Der Querschnitt des Längsträgers 3 ist in Figur 6 dargestellt. Dabei zeigt die Figur 6 a) den Querschnitt des Längsträgers 3 im vorderen Bereich, wo zur Aufnahme der dort wirkenden großen Kräfte und Momente zusätzlich ein Verstärkungsprofil 36 angeordnet ist. Figur 6 b) zeigt den Querschnitt des Längsträgers 3 im hinteren Bereich, wo ein solches Verstärkungsprofil 36 nicht erforderlich ist.

## Patentansprüche

1. Innenlader (14), umfassend zwei parallel zueinander angeordnete Längsträger (3), an denen Achshalteböcke (40) mit luftgefederten Einzelradschwingen (4) zur Aufnahme von Rädern (42) befestigt sind, **dadurch gekennzeichnet, dass** unter den Längsträgern (3) eine starre Kupplungsplatte angeschweißt ist, die mit einem hiermit korrespondierenden Kupplungselement einer Sattelzugmaschine (11) verbindbar ist.

2. Innenlader nach Anspruch 1, **dadurch gekennzeichnet, dass** die Kupplungsplatte als Sattelplatte (16) mit einem Kupplungszapfen (17) zur Aufnahme einer an der Zugmaschine (11) angeordneten Sattelkupplung (13) ausgebildet ist.

3. Innenlader nach Anspruch 1, **dadurch gekennzeichnet, dass** die Kupplungsplatte als Sattelkupplung zur Verbindung mit einer an der Sattelzugmaschine (11) angeordneten Sattelplatte mit Kupplungszapfen aufweist.

4. Innenlader nach einem der vorgenannten Ansprüche, **dadurch gekennzeichnet, dass** die Längsträger (3) jeweils aus einem einstückig gezogenen Aluminiumprofil gebildet sind.

5. Innenlader nach Anspruch 4, **dadurch gekennzeichnet, dass** die Längsträger (3) als Kastenprofil ausgebildet sind, in denen innen Verstrebungen (31) angeordnet sind, die einstückig in dem jeweiligen Längsträger (3) angeformt sind.

6. Innenlader nach Anspruch 4 oder 5, **dadurch gekennzeichnet, dass** die für die Achshalteböcke (40) der Einzelradschwingen (4) erforderlichen Anschlüsse an den Längsträgern (3) angeformt sind.

7. Innenlader-Sattelanhänger nach Anspruch 6, **dadurch gekennzeichnet, dass** die Anschlüsse für die Achshalteböcke (40) der Einzelradschwingen (4) Nuten (34) zur Aufnahme von Achshaltebockblechen (41) umfassen.

8. Innenlader nach einem der Ansprüche 4 bis 7, **dadurch gekennzeichnet, dass** an den Längsträgern (3) Einformungen (35) zur Befestigung einer Plane (7) angeordnet sind.

9. Innenlader nach einem der Ansprüche 4 bis 8, **dadurch gekennzeichnet, dass** an den Längsträgern (3) Einformungen zur flächigen Befestigung von Seitenblechen angeordnet sind.

10. Innenlader nach einem der vorgenannten Ansprüche, **dadurch gekennzeichnet, dass** in wenigstens einem Längsträger (3) wenigstens eine Ausnehmung (33) zur Aufnahme eines Bremszylinders (43) vorhanden ist.

11. Innenlader nach einem der vorgenannten Ansprüche, **dadurch gekennzeichnet, dass** an den Längsträgern (3) jeweils Längsnuten (34) eingeformt sind, in die Seitenwände (37) eines Verstärkungsprofils (36) eingreifen, das den jeweiligen Längsträger (3) in seiner Länge lediglich bereichsweise überdeckt.

12. Innenlader nach Anspruch 11, **dadurch gekennzeichnet, dass** das Verstärkungsprofil (36) aus einem einstückig gezogenen Aluminiumprofil gebildet ist.

13. Innenlader nach Anspruch 12, **dadurch gekennzeichnet, dass** das Verstärkungsprofil (36) in Art eines U-Profils ausgebildet ist, auf dessen Innenseite Verstrebungen (38) angeformt sind.

14. Sattelzug (1), umfassend eine Zugmaschine (11) und einen Innenlader (14) nach einem der vorgenannten Ansprüche, **dadurch gekennzeichnet, dass** die Zugmaschine (11) eine Luftfederung (12) aufweist, deren maximaler Hubweg wenigstens dem maximalen Hubweg der Luftfederung der Einzelradschwingen (4) des Innenladers (14) entspricht.
